# EUROPEAN PATENT APPLICATION

(11) **EP 4 656 119 A1**
(43) Date of publication of application: **03.12.2025**
(21) Application number: 23919237.0
(22) Date of filing: 31.05.2023
(51) Int. Cl.: A47L 15/16

(54) **DISHWASHER**

(30) Priority: 01.02.2023 CN 202320208574 U
(71) Applicant: Wuhu Midea Smart Kitchen Appliance Manufacturing Co., Ltd., Wuhu, Anhui 241000 (CN)
(72) Inventor: DU, Guanghui, Wuhu, Anhui 241000 (CN); TAO, Huawei, Wuhu, Anhui 241000 (CN); CHEN, Yingjie, Wuhu, Anhui 241000 (CN); YE, Mingcai, Wuhu, Anhui 241000 (CN); ZHANG, Jingyi, Wuhu, Anhui 241000 (CN); LI, Xiang, Wuhu, Anhui 241000 (CN)
(74) Representative: Ran, Handong
(86) International application number: PCT/CN2023/097576
(87) International publication number: WO 2024/159670

(57) **Abstract**

A dishwasher, comprising a spray arm structure (10) and a bowl basket assembly (20), wherein the spray arm structure (10) is arranged below the bowl basket assembly (20); the spray arm structure (10) comprises a guide pipe (11), a first spray arm (12), a second spray arm assembly (13), and a switch valve (14); and the first spray arm (12) is connected to the guide pipe (11) and can rotate relative to the guide pipe (11), the second spray arm assembly (13) is connected to the guide pipe (11) and remains relatively fixed with the bowl basket assembly (20), the second spray arm assembly (13) comprises a second spray arm (131), the second spray arm (131) is provided with a plurality of spray openings (1311), and the switch valve (14) is arranged on a water flow path of the second spray arm assembly (13) and is located upstream of the spray openings (1311).

## Description

### CROSS-REFERENCE TO RELATED APPLICATION

This invention is based on and claims priority to Chinese patent invention No. 202320208574.2 filed on February 1, 2023, the entire contents of which are incorporated herein by reference.

### FIELD

The present invention relates to the field of household appliances technologies, and more particularly, to a dishwasher.

### BACKGROUND

With the improvement of living standards, dishwashers that can free hands are gradually becoming necessities of a high-quality life. The household dishwasher generally adopts a sprayer. Water flow sprays under rotation of a spray arm driven by a washing pump to wash a surface of tableware. The spraying method has a poor cleaning performance on tableware like deep-mouthed bottles and baby bottles.

### SUMMARY

In view of this, it is expected to provide a dishwasher that can effectively clean tableware such as deep-mouthed bottles and is convenient to operate.

To achieve the above objections, a dishwasher is provided according to an embodiment of the present invention. The dishwasher includes a spray arm structure and a rack assembly. The rack assembly has a grid-shaped bottom. The spray arm structure is disposed below the rack assembly. The spray arm structure includes: a conduit; a first spray arm in communication with the conduit, the first spray arm being rotatable with respect to the conduit; a second spray arm assembly in communication with the conduit and remaining stationary with respect to the rack assembly, the second spray arm assembly including a second spray arm having a plurality of spray openings arranged at intervals along a longitudinal direction of the second spray arm; and an on-off valve disposed in a water flow path of the second spray arm assembly and located upstream of the plurality of spray openings.

In some embodiments, the on-off valve includes a handle portion that is rotatable, and the handle portion is partially disposed above the rack assembly such that the handle portion is capable of being toggled manually above the rack assembly.

In some embodiments, the on-off valve has an enabled state and a disabled state. When the on-off valve is in the enabled state, the handle portion abuts against a first side of a grid. When the on-off valve is in the disabled state, the handle portion abuts against a second side of the grid.

In some embodiments, the handle portion has a groove formed at a side wall of the handle portion facing the first side of the grid. When the on-off valve is in the enabled state, the groove of the handle portion is engaged with the first side of the grid.

In some embodiments, the on-off valve includes a handle portion that is rotatable, with a rotation axis oriented along a front-rear direction.

In some embodiments, the plurality of spray openings of the second spray arm are distributed within a rotation range of the first spray arm.

In some embodiments, the second spray arm is oriented along a front-rear direction of the rack assembly.

In some embodiments, the on-off valve is disposed at a rear end of the second spray arm.

In some embodiments, the conduit and the second spray arm extend along a front-rear direction and are arranged side by side along a left-right direction, the second spray arm assembly including a communication pipe communicated between the conduit and the second spray arm.

In some embodiments, the communication pipe includes a pipe body and a three-way pipe joint connected to the pipe body. The pipe body has an end connected to the conduit and another end connected to a first port of the three-way pipe joint. The three-way pipe joint has a second port connected to an end of the second spray arm. The on-off valve is disposed at a third port of the three-way pipe joint, and configured to selectively communicate the first port and the second port.

In some embodiments, the on-off valve includes a handle portion, a shaft portion, and a flap portion. The shaft portion has a first end inserted into the three-way pipe joint from the third port of the three-way pipe joint. The flap portion is fixed to the first end of the shaft portion. The handle portion is connected to a second end of the shaft portion. The flap portion is rotatable along with the handle portion to selectively communicate the first port.

In some embodiments, the dishwasher includes a snap-fitting configured to engage the second spray arm with the rack assembly.

In some embodiments, the snap-fitting includes: a connection portion disposed below the second spray arm to support the second spray arm; and elastic clamping portions disposed at two ends of the connection portion and clamping onto the rack assembly.

The dishwasher according to the embodiment of the present invention includes the spray arm structure and the rack assembly. The spray arm structure includes the first spray arm, the second spray arm assembly, and the on-off valve. The second spray arm assembly includes the second spray arm remaining stationary with respect to the rack assembly. The second spray arm includes the plurality of spray openings, through which water is continuously sprayed into tableware like deep-mouthed bottles or baby bottles placed on the rack assembly to effectively clean an inner wall of the tableware. The on-off valve is disposed upstream of each spray opening, which can simultaneously control opening and closing of all spray openings of the second spray arm, to facilitate user operation.

### BRIEF DESCRIPTION OF the DRAWINGS

The above and/or additional aspects and advantages of the present invention will become more apparent and more understandable from the following description of embodiments taken in conjunction with the accompanying drawings.
FIG. 1 is a schematic structural view of a dishwasher according to an embodiment of the present invention.
FIG. 2 is an enlarged schematic view of part A of the dishwasher illustrated in FIG. 1.
FIG. 3 is a schematic view of the dishwasher illustrated in FIG. 1 in a disabled state.
FIG. 4 is a sectional view of a spray arm structure of the dishwasher illustrated in FIG. 1.
FIG. 5 is a full front sectional view of the dishwasher illustrated in FIG. 1 in a disabled state.
FIG. 6 is a full front sectional view of the dishwasher illustrated in FIG. 1 in an enabled state.

Reference numerals of the accompanying drawings:
spray arm structure 10; conduit 11; first spray arm 12; second spray arm assembly 13; second spray arm 131; spray opening 1311; communication pipe 132; pipe body 1321; three-way pipe joint 1322; on-off valve 14; handle portion 141; groove 1411; shaft portion 142; flap portion 143;
rack assembly 20; grid 21; first side 211; second side 212; valley 22; peak 23;
snap-fitting 30; connection portion 31; elastic clamping portion 32; opening 321; boss 33.

### DETAILED DESCRIPTION OF THE EMBODIMENTS

Embodiments of the present invention will be further described in detail below in combination with the accompanying drawings and embodiments. The following embodiments are intended to illustrate the present invention, rather than limit the scope of the present invention.

In the description of embodiments of the present invention, it should be noted that, the orientation or the position indicated by terms such as "center", "longitudinal", "lateral", "over", "below", "front", "rear", "left", "right", "vertical", "horizontal", "top", "bottom", "inner", and "outer" should be construed to refer to the orientation or the position as shown in the drawings, and is only for the convenience of describing the present invention and simplifying the description, rather than indicating or implying that the pointed device or element must have a specific orientation, or be constructed and operated in a specific orientation, and therefore cannot be understood as a limitation of the present invention. In addition, the terms such as "first" "second", "third" are only used for descriptive purposes, and cannot be understood as indicating or implying relative importance.

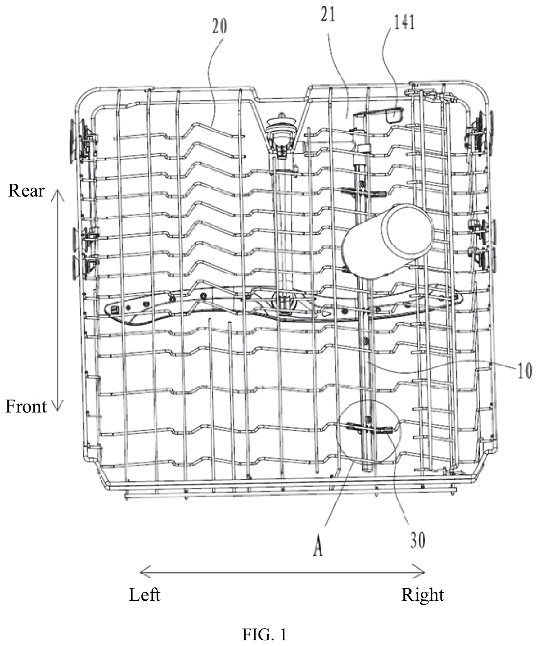

A dishwasher is provided according to an embodiment of the present invention. As illustrated in FIG. 1, the dishwasher includes a spray arm structure 10, a rack assembly 20, and a snap-fitting 30.

The rack assembly 20 has a grid-shaped bottom. Tableware is placed on the rack assembly 20. The spray arm structure 10 is disposed below the rack assembly 20. The spray arm structure 10 is configured to spray water flow upward. The water flow passes through the grid-shaped bottom of the rack assembly 20 and is sprayed on the tableware to clean oil stains and food residues on a surface of the tableware.

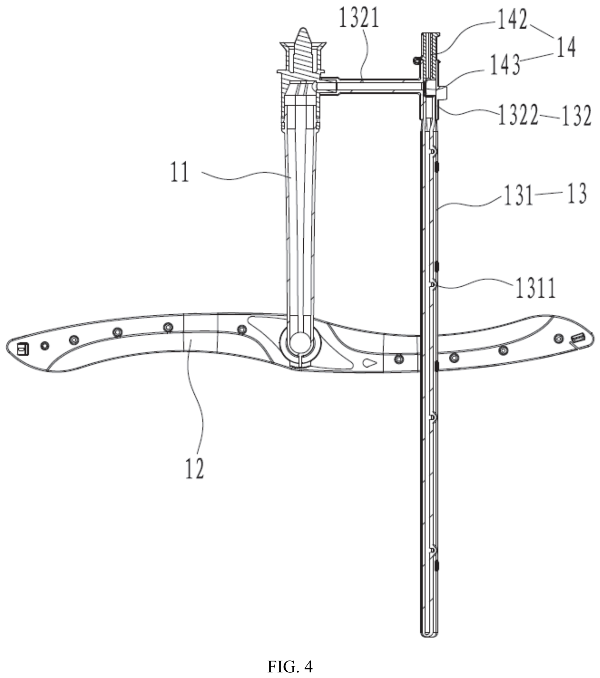

As illustrated in FIG. 4, the spray arm structure 10 includes a conduit 11, a first spray arm 12, a second spray arm assembly 13, and an on-off valve 14.

The first spray arm 12 is in communication with the conduit 11 and rotatable with respect to the conduit 11. The conduit 11 is a passage through which water flow enters into the first spray arm 12 and the second spray arm assembly 13. The first spray arm 12 has a plurality of main spray openings distributed along a longitudinal direction. When the first spray arm 12 is rotated, each of the main spray openings sprays water flow to rotate and rinse the tableware on the rack assembly 20.

The second spray arm assembly 13 is in communication with the conduit 11 and remaining stationary r with respect to the rack assembly 20. The second spray arm assembly 13 includes a second spray arm 131 having a plurality of spray openings 1311 arranged at intervals along a longitudinal direction of the second spray arm 131. The water flow is sprayed upward through the plurality of spray openings 1311 to rinse the tableware like the deep-mouthed bottles and the baby bottles above. Since the second spray arm 131 is relatively fixed to the tableware such as the deep-mouthed bottle, the water flow can be continuously sprayed to an inner wall of the tableware such as the deep-mouthed bottle to improve a cleaning performance.

The on-off valve 14 is disposed in a water flow path of the second spray arm assembly 13 and located upstream of the plurality of spray openings 1311. Opening and closing of each spray opening 1311 is controlled by the on-off valve 14, in such a manner that a user can conveniently choose whether to open each spray opening 1311 on the second spray arm 131, thereby saving water resources.

In the above scheme, on the basis of providing the first spray arm 12 that is rotatable, the second spray arm 131 is provided. The second spray arm 131 is relatively fixed to the rack assembly 20. The second spray arm 131 includes the plurality of spray openings 1311, through which water is continuously sprayed into the tableware like the deep-mouthed bottles and the baby bottles, to effectively clean the inner wall of the tableware. The on-off valve 14 is configured to simultaneously control the opening and the closing of the spray opening 1311 of the second spray arm 131. In this way, the user can conveniently choose whether to open the spray opening 1311 on the second spray arm 131, thereby saving water resources.

In the above scheme, a quantity of the second spray arm 131 is not limited. However, in this embodiment, one second spray arm 131 is provided.

In some embodiments, a main spray opening on the first spray arm 12 is inclined along a vertical direction. Therefore, when the water flow is sprayed, a horizontal reaction force is generated to cause the first spray arm 12 to rotate.

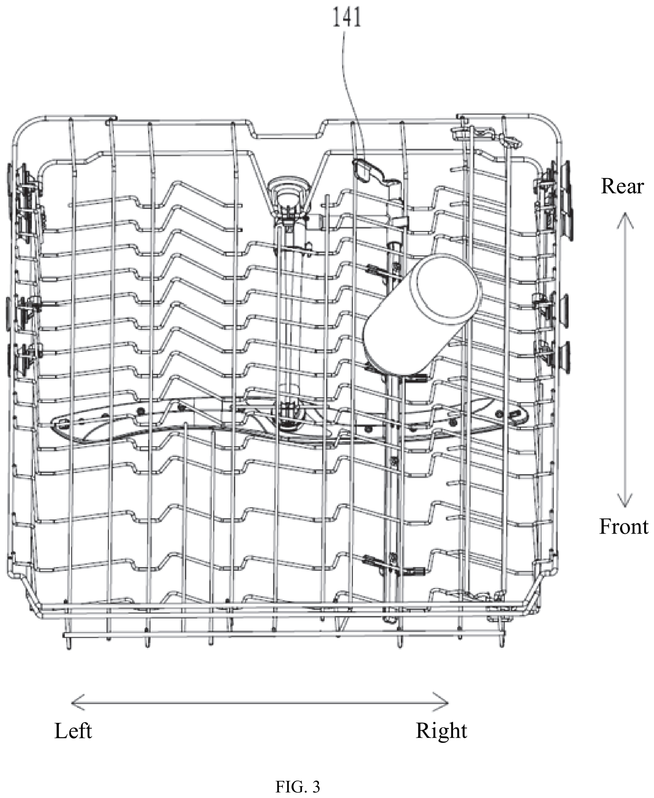

Exemplarily, as illustrated in FIG. 1 and FIG. 3, the on-off valve 14 includes a handle portion 141 that is rotatable. The handle portion 141 is partially disposed above the rack assembly 20 such that the handle portion 141 is capable of being toggled manually above the rack assembly 20, thereby facilitating user operation. Here, the on-off valve 14 is a manual on-off valve. It should be understood that in some embodiments, one end of the handle portion 141 protrudes upward from a grid 21 at a bottom of the rack assembly 20. In other embodiments, one end of the handle portion 141 protrudes upward from a side of the rack assembly 20.

An arrangement position of the on-off valve 14 is not limited. In some embodiments, the on-off valve 14 is disposed at a position close to a door body of the dishwasher, which is convenient for the user to operate.

Exemplarily, as illustrated in FIG. 1, FIG. 3, FIG. 5, and FIG. 6, the on-off valve 14 has an enabled state and a disabled state. When the on-off valve 14 is in the enabled state, the second spray arm 131 is in communication with the conduit 11. When the on-off valve 14 is in the disabled state, the second spray arm 131 is closed and not in communication with the conduit 11, in such a manner that water flow cannot enter the second spray arm 131.

When the on-off valve 14 is in the enabled state, the handle portion 141 abuts against a first side 211 of a grid 21. When the on-off valve 14 is in the disabled state, the handle portion 141 abuts against a second side 212 of the grid 21. When the first side 211 and the second side 212 limit a limit position of rotation of the handle portion 141, the user can judge that an opening operation is completed by the handle portion 141 abutting against the first side 211 and judge that a closing operation is completed by the handle portion 141 abutting against the second side 212 in a process of operating the on-off valve 14. This process does not involve visual judgment, simplifying operation of the user. In some embodiments, the first side 211 and the second side 212 are located at a left side and a right side opposite to the left side of the grid 21, respectively. That is, the on-off valve 14 is opened or closed by rotating along a left direction and along a right direction, which is convenient for the user to operate.

In some embodiments, a height of the bottom of the rack assembly 20 fluctuates along a left-right direction, forming a peak 23 and a valley 22. Tableware like the deep-mouthed bottles and the baby bottles are placed between adjacent valleys 22 along a front-rear direction with a bottle mouth facing downward, and a bottle body inclined between adjacent peaks 23 along the front-rear direction.

It should be noted that a bottom of the rack assembly 20 is surrounded by a plurality of wires arranged vertically and horizontally. That is, the first side 211 and the second side 212 of the grid 21 are outer walls of wires. The above wires may be metal wires.

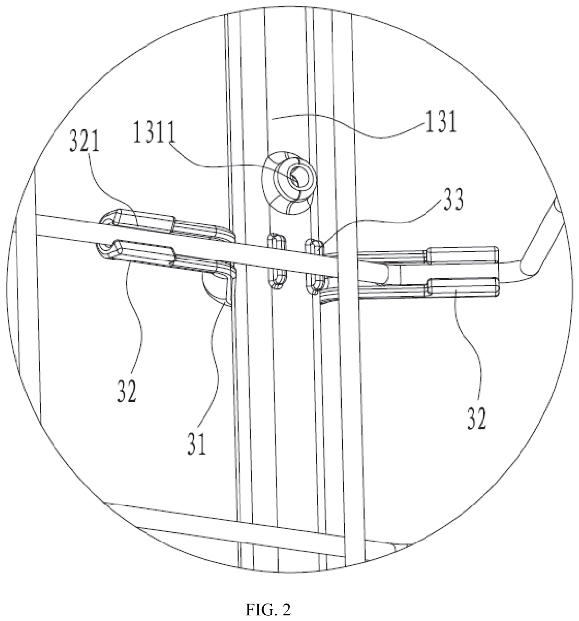

In some embodiments, as illustrated in FIG. 1 and FIG. 2, the spray opening 1311 of the second spray arm 131 is inclined with respect to a vertical direction. That is, an outflow direction of the water flow sprayed from the spray opening 1311 is inclined from the vertical direction. In this way, an angle of the water flow sprayed into the deep-mouthed bottle and a position of initial contact with an inner wall of the deep-mouthed bottle are adjusted. In this embodiment, the deep-mouthed bottle and the baby bottle are inclined to the right, and the spray opening 1311 is also inclined to the right.

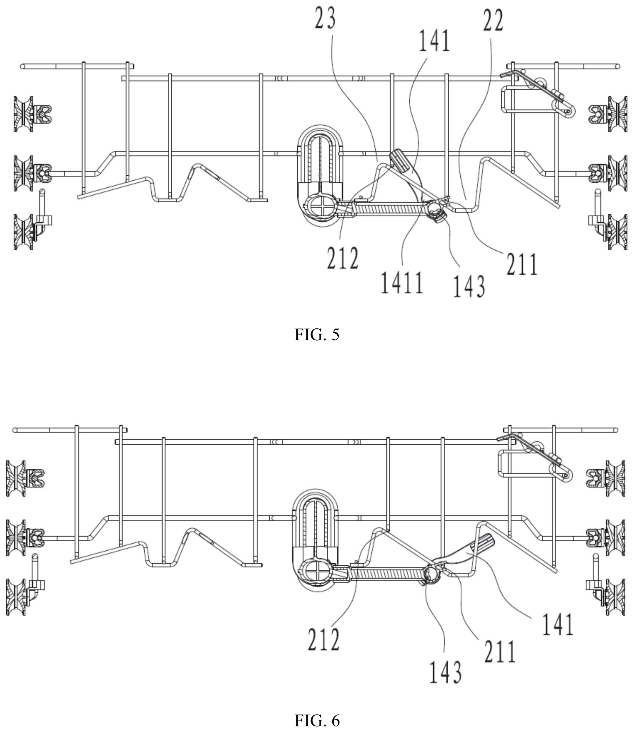

Exemplarily, as illustrated in FIG. 5 and FIG. 6, the handle portion 141 has a groove 1411 formed at a side wall of the handle portion 141 facing the first side 211 of the grid 21. When the on-off valve 14 is in the enabled state, the groove 1411 of the handle portion 141 is engaged with the first side 211 of the grid 21. An arrangement of the groove 1411 increases a rotational stroke of the handle portion 141 to a certain extent, thereby facilitating an increase in a cross-sectional area of a water flow channel of the second spray arm assembly 13 at a position of the on-off valve 14 and thus a reduction in a pressure loss of the water flow.

In some embodiments, the groove 1411 extends through both a front surface and a rear surface of the handle portion 141. A side wall of the groove 1411 is an inclined avoidance arc-shaped surface to avoid interference between the side wall of the groove 1411 and the first side 211 of the grid 21 during opening of the on-off valve 14.

Exemplarily, a rotation axis of the handle portion 141 is oriented along a front-rear direction to allow the handle portion 141 to be toggled to the left or the right. This setting makes the user operate more conveniently without a need to adjust a length of an arm extending into the dishwasher during toggling of the handle portion 141.

Exemplarily, as illustrated in FIG. 1 and FIG. 3, the plurality of spray openings 1311 of the second spray arm 131 are distributed within a rotation range of the first spray arm 12. The spray opening 1311 of the second spray arm 131 sprays the water flow, and the water flow is continuously sprayed into the tableware like the deep-mouthed bottles and the baby bottles to clean the inner wall of the tableware. The main spray opening of the first spray arm 12 sprays the water flow and rotates to rinse a surface of the tableware like the deep-mouthed bottles and the baby bottles, and to assist in cleaning the inner wall of the tableware like the deep-mouthed bottles and the baby bottles. In this embodiment, to avoid interference, the second spray arm 131 has a height slightly larger than that of the first spray arm 12.

In some embodiments, the second spray arm 131 is a non-circular tubular structure having one end open and the other end closed. Each spray opening 1311 is formed at a tube wall.

Exemplarily, as illustrated in FIG. 1 and FIG. 3, the second spray arm 131 is oriented along a front-rear direction of the rack assembly 20. That is, the spray openings 1311 are sequentially distributed along the front-rear direction of the basket assembly 20 at intervals. In this embodiment, the second spray arm 131 is arranged below the valley 22 along the front-rear direction of the rack assembly 20, in such a manner that each spray opening 1311 is aligned with each bottle mouth placed at the valley 22.

Exemplarily, the on-off valve 14 is disposed at a rear end of the second spray arm 131 to be closer to a conduit disposed at the rear end, thereby reducing a length of a communication pipe 132 between the conduit 11 and the second spray arm 131. Also, the communication pipe 132 does not appear on a front end side of the rack assembly 20, which is visually clean and beautiful.

Exemplarily, as illustrated in FIG. 1 and FIG. 4, the conduit 11 and the second spray arm 131 extend along a front-rear direction and are arranged side by side along a left-right direction to reduce an overall length of the conduit 11 and the second spray arm 131 after the conduit 11 is in communication with the second spray arm 131, facilitating arrangement of the conduit 11 and the second spray arm 131 under the rack assembly 20.

The second spray arm assembly 13 includes a communication pipe 132 communicated between the conduit 11 and the second spray arm 131. Water flow in the conduit 11 flows into the communication pipe 132 and flows into an upstream position of each spray opening 1311 of the second spray arm 131 through the communication pipe 132.

Exemplarily, as illustrated in FIG. 4, the communication pipe 132 includes a pipe body 1321 and a three-way pipe joint 1322 connected to the pipe body 1321. The pipe body 1321 has an end connected to the conduit 11 and another end connected to a first port of the three-way pipe joint 1322. The three-way pipe joint 1322 has a second port connected to an end of the second spray arm 131. From the conduit 11, the water flow enters into the pipe body 1321 and into the three-way pipe joint 1322 through the first port. The on-off valve 14 is disposed at a third port of the three-way pipe joint 1322, and configured to selectively communicate the first port and the second port.

Exemplarily, the on-off valve 14 includes a handle portion 141, a shaft portion 142, and a flap portion 143. The shaft portion 142 has a first end inserted into the three-way pipe joint 1322 from the third port of the three-way pipe joint 1322. The flap portion 143 is fixed to the first end of the shaft portion 142. The handle portion 141 is connected to a second end of the shaft portion 142. The flap portion 143 is rotatable along with the handle portion 141 to selectively communicate the first port, thereby selectively communicating of the first port and the second port.

In some embodiments, the flap portion 143 is disposed at an end face edge of the first end of the shaft portion 142. The flap portion 143 has an arc-shaped outer wall to be in close contact with an inner wall of the three-way pipe joint 1322. During rotation of the handle portion 141, the flap portion 143 can slide closely against the inner wall of the three-way pipe joint 1322.

In some embodiments, the pipe body 1321 and the three-way pipe joint 1322 are integrally formed.

Exemplarily, as illustrated in FIG. 1 and FIG. 2, the dishwasher includes a snap-fitting 30 configured to engage the second spray arm 131 with the rack assembly 20 to realize detachable assembly connection thereof. In this embodiment, a plurality of sets of snap-fittings 30 are provided and arranged at intervals along the longitudinal direction of the second spray arm 131.

Exemplarily, the snap-fitting 30 includes a connection portion 31 disposed below the second spray arm 131 to support the second spray arm 131, and elastic clamping portions 32 disposed at two ends of the connection portion 31 and clamping onto the rack assembly 20. In this way, the second spray arm 131 is detachably connected to the rack assembly 20.

In some embodiments, the snap-fitting 30 is disposed in an intersecting manner on the second spray arm 131. The connection portion 31 is located below the second spray arm 131. The elastic clamping portions 32 at two ends are distributed at the left side and the right side of the second spray arm 131.

The elastic clamping portion 32 has an open semi-annular shape, and includes an inner groove and an opening 321 in communication with the inner groove. A width of the opening 321 may increase under an external force. When the external force is removed, the opening 321 may return to an original state due to an elastic force of the elastic clamping portion 32. In a natural state, a gap between the openings 321 is smaller than a sidewall width of the grid 21. During assembly, the opening 321 is opened by the wire of the rack assembly 20, and a side edge of the grid 21 enters the inner groove from the opening 321. In this way, the width of the opening 321 is reduced to realize the clamping onto the rack assembly 20.

In some embodiments, the connection portion 31 and the elastic clamping portion 32 are integrally injection molded.

To make connection of the second spray arm 131 more stable, in some embodiments, a boss 33 that protrudes upward is disposed in an upper surface of the second spray arm 131. The boss 33 abuts against the rack assembly 20.

In the description of the present invention, the description with reference to the terms "one embodiment", "some embodiments", "an example", "a specific example", or "some examples", etc., means that specific features, structures, materials, or characteristics described in conjunction with the embodiment(s) or example(s) are included in at least one embodiment or example of the present invention. In the present invention, any illustrative reference of the above terms does not necessarily refer to the same embodiment(s) or example(s). Further, the particular features, structures, materials, or characteristics may be combined in any suitable manner in any one or more embodiments or examples. In addition, different embodiments or examples and features of different embodiments or examples described in the specification may be combined by those skilled in the art without mutual contradiction.

The above are merely preferred embodiments of the present invention and are not intended to limit the present invention. For those skilled in the art, various modifications and variations can be made to the disclosed embodiments. Any modification, equivalent substitution, and improvement made within the spirit and principles of the present invention shall fall within the protection scope of the present invention.

## Claims

1. A dishwasher, comprising a spray arm structure (10) and a rack assembly (20), the rack assembly (20) having a grid-shaped bottom, and the spray arm structure (10) being disposed below the rack assembly (20), wherein the spray arm structure (10) comprises:
a conduit (11);
a first spray arm (12) in communication with the conduit (11) and rotatable with respect to the conduit (11);
a second spray arm assembly (13) in communication with the conduit (11) and remaining stationary with respect to the rack assembly (20), wherein the second spray arm assembly (13) comprises a second spray arm (131) having a plurality of spray openings (1311) arranged at intervals along a longitudinal direction of the second spray arm (131); and
an on-off valve (14) disposed in a water flow path of the second spray arm assembly (13) and located upstream of the plurality of spray openings (1311).

2. The dishwasher according to claim 1, wherein the on-off valve (14) comprises a handle portion (141) that is rotatable, and the handle portion (141) is partially disposed above the rack assembly (20) such that the handle portion (141) is capable of being toggled manually above the rack assembly (20).

3. The dishwasher according to claim 2, wherein:
the on-off valve (14) is operatable between an enabled state and a disabled state;
when the on-off valve (14) is in the enabled state, the handle portion (141) abuts against a first side (211) of a grid (21); and
when the on-off valve (14) is in the disabled state, the handle portion (141) abuts against a second side (212) of the grid (21).

4. The dishwasher according to claim 3, wherein:
the handle portion (141) has a groove (1411) formed at a side wall of the handle portion (141) facing the first side (211) of the grid (21); and
when the on-off valve (14) is in the enabled state, the groove (1411) of the handle portion (141) is engaged with the first side (211) of the grid (21).

5. The dishwasher according to claim 1, wherein the on-off valve (14) comprises a handle portion (141) that is rotatable with a rotation axis oriented along a front-rear direction.

6. The dishwasher according to any one of claims 1 to 5, wherein the plurality of spray openings (1311) of the second spray arm (131) are distributed within a rotation range of the first spray arm (12).

7. The dishwasher according to any one of claims 1 to 6, wherein the second spray arm (131) is oriented along a front-rear direction of the rack assembly (20).

8. The dishwasher according to claim 7, wherein the on-off valve (14) is disposed at a rear end of the second spray arm (131).

9. The dishwasher according to any one of claims 1 to 8, wherein:
the conduit (11) and the second spray arm (131) extend along a front-rear direction and are arranged side by side along a left-right direction; and
the second spray arm assembly (13) comprises a communication pipe (132) communicating the conduit (11) with the second spray arm (131).

10. The dishwasher according to claim 9, wherein:
the communication pipe (132) comprises a pipe body (1321) and a three-way pipe joint (1322) communicating with the pipe body (1321);
the pipe body (1321) has an end connected to the conduit (11) and another end connected to a first port of the three-way pipe joint (1322);
the three-way pipe joint (1322) has a second port connected to an end of the second spray arm (131); and
the on-off valve (14) is disposed at a third port of the three-way pipe joint (1322), and configured to selectively communicate the first port and the second port.

11. The dishwasher according to claim 10, wherein:
the on-off valve (14) comprises a handle portion (141), a shaft portion (142), and a flap portion (143);
the shaft portion (142) has a first end inserted into the three-way pipe joint (1322) from the third port of the three-way pipe joint (1322); and
the flap portion (143) is fixed to the first end of the shaft portion (142), the handle portion (141) is connected to a second end of the shaft portion (142), and the flap portion (143) is rotatable along with the handle portion (141) to selectively communicate the first port.

12. The dishwasher according to any one of claims 1 to 11, comprising a snap-fitting (30) configured to engage the second spray arm (131) with the rack assembly (20).

13. The dishwasher according to claim 12, wherein the snap-fitting (30) comprises:
a connection portion (31) disposed below the second spray arm (131) to support the second spray arm (131); and
elastic clamping portions (32) disposed at two ends of the connection portion (31) and clamping onto the rack assembly (20).
